(19) **Europäisches Patentamt / European Patent Office / Office européen des brevets**

(11) **EP 2 206 689 B1**

(12) **EUROPEAN PATENT SPECIFICATION**

(45) Date of publication and mention
of the grant of the patent:
**02.05.2018 Bulletin 2018/18**

(51) Int Cl.:
***C03B 37/012*** (2006.01) ***C03B 37/014*** (2006.01)

(21) Application number: **09180554.9**

(22) Date of filing: **23.12.2009**

(54) **Method and apparatus for manufacturing optical fiber preform using high frequency induction thermal plasma torch**

Verfahren und Vorrichtung zur Herstellung einer Glasfaservorform mit einem thermischen Hochfrequenzinduktionsplasmabrenner

Procédé et appareil pour la fabrication de préforme de fibre optique utilisant une torche à plasma thermique à induction haute fréquence

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.12.2008 JP 2008333748**

(43) Date of publication of application:
**14.07.2010 Bulletin 2010/28**

(73) Proprietor: **Shin-Etsu Chemical Co., Ltd.**
**Chiyoda-ku,**
**Tokyo 100-0004 (JP)**

(72) Inventor: **Otosaka, Tetsuya**
**Gunma-ken (JP)**

(74) Representative: **Michalski Hüttermann & Partner**
**Patentanwälte mbB**
**Speditionstraße 21**
**40221 Düsseldorf (DE)**

(56) References cited:
**EP-A2- 1 997 783 DE-A1- 10 043 031**
**JP-A- 6 321 552 JP-A- 59 190 232**
**JP-A- 2005 200 265 US-A- 5 194 714**
**US-A1- 2006 288 739**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. TECHNICAL FIELD

The present invention relates to a method and an apparatus for manufacturing an optical fiber preform using a high frequency induction thermal plasma torch.

2. RELATED ART

A high frequency induction thermal plasma torch is an apparatus provided with a high frequency coil on a periphery of a gas flow tube, and a high frequency current is applied to ionize the gas therein and emit the resulting plasma from a nozzle. Such a high frequency induction thermal plasma torch can achieve extremely high temperatures around 10,000 degrees, has relatively low plasma velocity, and enables free selection of oxidation and reduction atmosphere, and is therefore used as an ultra-high temperature reaction field.

An optical fiber formed by covering a pure silica glass core with a fluorine-doped silica glass cladding is more durable with regard to UV rays and radiation than a commonly used optical fiber that is formed by covering a germanium-doped silica glass core with a pure silica glass cladding. This greater durability is due to the absence of GeO bonding, which has low bonding energy.

Two methods that are known for providing the fluorine-doped silica glass cladding on the pure silica glass core include (1) forming a porous glass layer by depositing pure silica glass particles on the periphery of a pure silica glass rod and converting the glass particles into transparent glass in a fluorine atmosphere, as disclosed in Japanese Patent Publication No. 4-79981, and (2) using a plasma flame on a periphery of a pure silica glass rod to directly deposit fluorine-doped silica glass, as disclosed in Japanese Patent Publication No. 2-47414.

In method (1), the relative refractive index difference $\Delta$ is limited to less than approximately 0.7%, and so method (1) is suitable for achieving favorable throughput and providing a thick cladding layer. Method (2) has inferior throughput compared to method (1), but can acheive a relative refractive index difference $\Delta$ greater than 0.7%. The relative refractive index difference $\Delta$ is defined below in Expression 1.

$$\text{Expression 1: } \Delta = (n_{core} - n_{clad})/n_{core}$$

Here, $n_{core}$ and $n_{clad}$ represent the refractive indices of the core and the cladding.

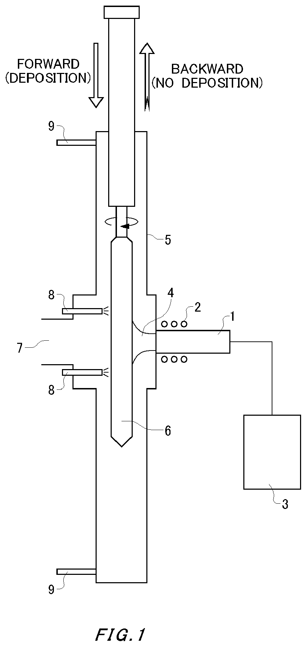

Method (2) is described using Fig. 1. A coil 2 is provided to a plasma torch 1, and when high-frequency power is applied to the coil 2, gas supplied from a gas supply apparatus 3 is ionized in the plasma torch 1 and emitted as a plasma flame 4. The supplied gas may include argon, oxygen, silicon tetrachloride, a glass including fluorine such as silicon tetrafluoride, ethane hexafluoride, and sulfur hexafluoride, and the like.

Fluorine-doped glass particles are generated in the plasma flame 4, and these fluorine-doped glass particles are deposited on a surface of a glass rod 6, i.e. a target, that moves up and down while rotating in a reaction chamber 5. Exhaust gas and glass particles that are not affixed to the glass rod 6 arc expelled from the system via an exhaust outlet 7. By repcatedly depositing a thin film of the fluorine-doped glass particles in this way, an optical fiber preform is manufactured having a cladding layer with a desired thickness. In Fig. 1, reference numeral 8 indicates forced cooling nozzles and reference numeral 9 indicates cool air induction apertures,

Japanese Patent Application No. 2007-142423 discloses a technique that involves supplying glass particles to a glass rod 6 moving symmetrically forward and backward over a plasma torch 1, only when the glass rod 6 moves forward. The supply of glass raw material is stopped while the glass rod 6 moves backward, and the plasma temperature is lowered and then quickly returned to the original temperature. As a result, the refractive index of the cladding can be stabilized in a longitudinal direction.

Known from EP 1 997 783 A2 is a method of manufacturing an optical fibre preform using a high frequency induction thermal plasma. In detail, the method comprises the step of feeding glass raw material, dopant material and oxygen gas to a high frequency induction thermal plasma torch to synthesize glass particles in plasma therein, and a step of rotating and reciprocating a glass rod relative to the plasma torch to deposit the synthesized glass particles onto the glass rod, wherein the feeding step includes a step of feeding the glass raw material to the plasma torch in a first direction of the reciprocating motion of the glass rod, and a step of reducing a feeding amount of the glass raw material to the plasma torch in a second direction of the reciprocating motion relative to a feeding amount of the glass raw material to the plasma torch in the first direction.

Known from US 5,194,714 is a method and a device serving in particular to fabricate preforms intended to be subsequently transformed by drawing into optical fibres for telecommunication cables. This method consists in maintaining the rod onto which the deposition of silica is made in a sealed enclosure separated from the surrounding atmosphere and supplied with atmospheric air which is successively subjected to filtering, to compression and cooling, to draining of the condensation water and to a final desiccation by adsorption.

Disclosed in DE 100 43 031 A1 is a method for forming a green body, in which a flame is directed towards a rotating support. In order to optimize the efficiency and homogeneity of the formed green body, the flame is directed towards the support being displaced with respect to the main axis of the support.

The numerical aperture NA of an optical fiber obtained by heating, melting, and drawing a preform is shown below in Expression 2.

$$\text{Expression 2}: NA = (n_{core}^2 - n_{clad}^2)^{1/2}$$

Here, NA is a parameter representing a spread angle of light that can be received by the optical fiber, and so a higher value for NA means that the optical fiber can transmit light received from a larger range of directions.

In the optical fiber formed from a pure silica core and fluorine-doped cladding dealt with here, $n_{core}$ is approximately 1.457 and $n_{clad}$ changes according to the fluorine concentration. NA and relative refractive index difference $\Delta$ are correlated with each other, such that NA increases when the relative refractive index difference is greater,

SUMMARY

Therefore, it is an object of an aspect of the innovations herein to provide a method and an apparatus for manufacturing an optical fiber preform using a high frequency induction thermal plasma torch, which are capable of improving the relative refractive index difference of a preform by increasing the fluorine concentration doped in the cladding. The above and other objects can be achieved by combinations described in the independent claims. The dependent claims define further advantageous and exemplary combinations of the innovations herein.

The optical fiber preform manufacturing method according to the present invention involves supplying a high-frequency induction thermal plasma torch with at least glass raw material, dopant raw material, and oxygen, and depositing the glass particles synthesized in the plasma flame onto a surface of a glass rod that moves backward and forward relative to the plasma torch while rotating, wherein the plasma flame is narrowed such that at least a portion of the glass particles continuously formed by the plasma flame are not deposited on the glass rod. It comprises the steps of synthesizing glass particles using a plasma flame generated by a plasma torch; depositing the glass particles containing fluorine as a dopant on a glass rod by blowing the glass rod with the plasma flame with the glass particles containing fluorine while the glass rod moves relative to the plasma torch in a forward direction; narrowing, in a direction of the relative movement, a region in which the glass particles in the plasma flame are affixed to the glass rod by narrowing the flame flow of the plasma flame to retract an edge of the flame in the forward direction of the glass rod, and moving the glass rod relative to the plasma torch in a backward direction while blowing the glass rod with the plasma flame without the glass particles containing fluorine, wherein the narrowing comprises providing a room temperature air or cool air supplying section for obstructing affixation of the glass particles on the glass rod only in a front portion of the region, where the front portion is blown by the plasma flame before a rear portion of the region.

A gas, in particular air, blown toward the glass particle flow may be blown toward the glass particle flow causing the hottest region in the peripheral temperature distribution of the glass rod. In order to prevent deposition of a portion of the glass particle flow, the gas may be blown toward a portion of the glass particle stream that is forward with respect to the movement or rotation of the glass rod. As another example, the gas may be blown at the glass particle stream along the glass rod from a forward region thereof.

The optical fiber preform manufacturing apparatus according to the present invention supplies a high-frequency induction thermal plasma torch with at least glass raw material, dopant raw material, and oxygen, and deposits the glass particles synthesized in the plasma flame onto a surface of a glass rod that moves backward and forward relative to the plasma torch while rotating, and is provided with a deposition obstructing component that narrows the plasma flame such that at least a portion of the glass particles continuously formed by the plasma flame are not deposited on the glass rod. The apparatus comprises a plasma torch for synthesizing glass particles in a plasma flame; a depositing section for depositing the glass particles containing fluorine as a dopant on the glass rod by blowing the glass rod with the plasma flame with the glass particles containing fluorine while the glass rod moves relative to the plasma torch in a forward direction; a limiting section for narrowing, in a direction of the relative movement, a region in which the glass particles in the plasma flame are affixed to the glass rod by narrowing the flame flow of the plasma flame to retract an edge of the flame in the forward direction of the glass rod, wherein the glass rod is moveable relative to the plasma torch in a backward direction while blowing the glass rod with the plasma flame without the glass particles containing fluorine, wherein the limiting section comprises a room temperature air or cool air supplying section that obstructs affixation of the glass particles on the glass rod and is provided only in a front portion of the region, where the front portion is blown by the plasma flame before a rear portion of the region.

The deposition obstructing component is provided is a deposition obstruction nozzle provided on the apparatus on a forward side relative to the movement of the glass rod, and blows gas toward the glass particle flow in a forward region of the glass rod. As another example, the deposition obstructing section may be a gas guide tube through which the glass rod is passed, and at least a portion of the deposition of the glass particle flow may be obstructed by blowing a gas along the glass rod to the glass particle flow from a gap between the gas guide tube and the glass rod from a forward region thereoff.

By preventing deposition of at least a portion of the glass particle flow formed in the plasma flame onto the glass rod, the present invention can increase the fluorine concentration in the cladding to improve the relative refractive index difference of the preform.

The summary clause does not necessarily describe all necessary features of the embodiments of the present invention. The present invention may also be a subcombination of the features described above. The above and other features and advantages of the present invention will become more apparent from the following description of the embodiments taken in conjunction with the accompanying drawings.

BRIEF DESCRIPTION OF THE DRAWINGS

Fig. 1 is a schematic cross-sectional view of an optical fiber preform manufacturing apparatus provided with a conventional high-frequency induction thermal plasma torch.
Fig. 2 shows the plasma torch along with a relationship between temperature, deposition amount, and relative refractive index difference Δ measured along the movement direction of the glass rod.
Fig. 3 is a schematic cross-sectional view of the manufacturing apparatus according to the present invention,
Fig. 4 is a schematic cross-sectional view of the manufacturing apparatus according to the present invention in a different state than shown in Fig. 3.
Fig. 5 is a schematic view of an exemplary positioning of the deposition obstructing gas nozzle.
Fig. 6 is a schematic view of an exemplary positioning of the deposition obstructing gas nozzle.
Fig. 7 shows a temperature distribution over the surface of the glass rod relative to the rotation and movement of the glass rod.

DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

The flow of glass particles in a plasma flame is divided upon contact with a glass rod to flow forward and backward along the direction in which the glass rod moves. At this time, the refractive index of a glass film instantaneously deposited by the flow of glass particles differs in a portion in front of the contact point and a portion behind the contact point, i.e. the flow differs in the direction of movement of the glass rod. The present invention is based on this difference.

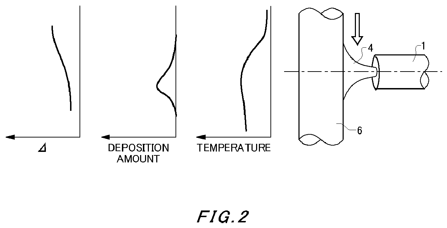

Fig. 2 shows the plasma torch 1 along with temperature, deposition amount, and the relative refractive index difference Δ measured along the direction of movement of the glass rod 6. The portion of the glass rod 6 on the forward side, which is downward in Fig. 2, results in higher temperatures since this portion has already been heated by the plasma flame 4. Furthermore, in this forward portion, the amount of affixed glass particles is greater and the fluorine doping amount is lower, which results in a lower relative refractive index difference Δ.

Based on the observations of Fig. 2, it was determined that since the region having a relatively high temperature has a large amount of deposition but a small amount of fluorine doping, which results in a low relative refractive index difference, the relative refractive index difference Δ of the deposition layer can be improved by decreasing the temperature in the hottest region by moving this region from the center of the flame to a position slightly farther away in the direction of motion of the glass rod 6 or in a direction of rotation of the glass rod 6. Therefore, the present invention achieves a higher relative refractive index difference Δ by lowering the temperature of the hottest region to increase the fluorine doping amount and by obstructing the deposition of at least a portion of the glass particles. The present invention achieves this effect by narrowing the flame flow to retract an edge of the flame in the forward direction of the glass rod 6 or in the downward rotational direction of the glass rod 6. More specifically, the present invention uses a deposition obstructing gas nozzle to blow gas toward the glass particle flow that is directed at the hottest region on the surface of the glass rod 6.

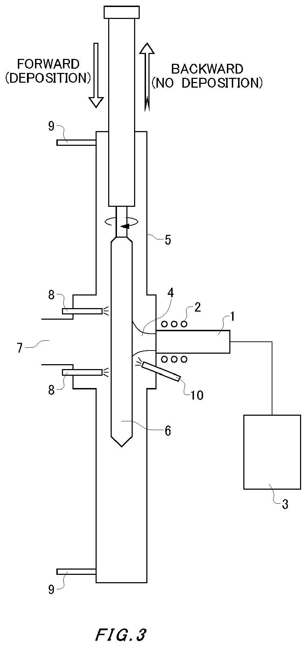

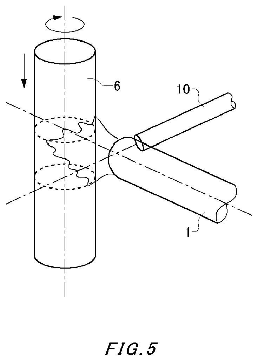

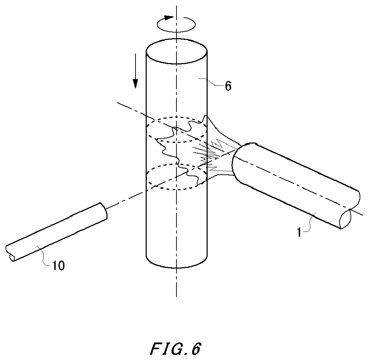

One exemplary technique for preventing deposition of at least a portion of the glass particle flow on the forward side of the glass rod 6 involves using the deposition obstructing gas nozzle 10 shown in Fig. 3 to obstruct the glass particle deposition. This deposition obstructing gas nozzle 10 is provided on the same side as the plasma torch 1, but if the structure of the apparatus makes this position of the gas nozzle 10 difficult or if a malfunction occurs due to unaffixed glass particles being deposited on the tip of the deposition obstructing gas nozzle 10, the deposition obstructing gas nozzle 10 may instead be positioned at a 90-degree angle, for example, as shown in Figs. 5 and 6.

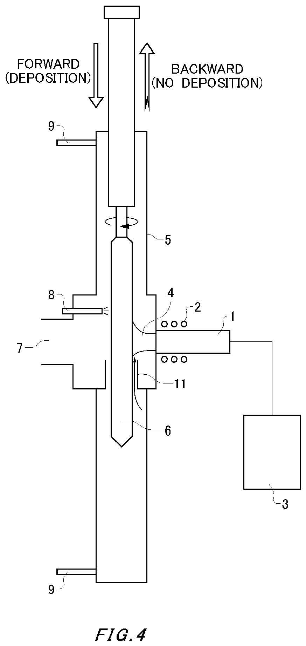

Another exemplary technique for preventing deposition of at least a portion of the glass particle flow on the forward side of the glass rod 6 involves using the gas guide tube 11 shown in Fig. 4. With this technique, the gas is blown on the glass particle flow from the forward side of the glass rod 6, which is downward in Fig. 4, along the length of the glass rod 6.

The gas guide tube 11 is provided immediately below the plasma flame 4. The gas guide tube 11 directs the air entering from a cool air induction aperture 9 provided at the bottom reaction chamber through the space between the glass rod 6 and the gas guide tube 11 into the plasma flame 4 along the glass rod 6. As a result, deposition of a portion of the glass particles below the plasma flame 4, i.e. on the forward side of the glass rod 6, is obstructed. Since it is easy for the deposition of unaffixed glass particles to occur on the plasma torch side of the gas guide tube 11, it is desirable to carve away a portion of the gas guide tube 11 on the plasma torch side.

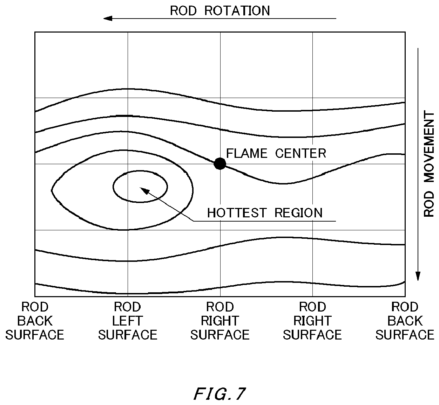

As shown in Fig. 7, the heated glass rod 6 experiences temperature distribution in the direction of rotation as well as the longitudinal direction. The position in the rotational direction at which the hottest region occurs is affected by the outer diameter of the glass rod 6, the size of the plasma flame, the rotational speed of the glass rod 6, and the like, but the hottest region is always downstream in the rod rotation. When deposition is prevented by the deposition obstructing gas nozzle 10 blowing a gas toward the glass particle flow causing the hottest region, the increase in the refractive index is maximized. In other words, the arrangement shown in Fig. 6 is more effective than the arrangement shown in Fig. 5.

The plasma torch is provided with glass raw material only during the forward movement of the glass rod, at which time silicon tetrachloride, silicon tetrafluoride, argon, and oxygen are supplied. During the backward movement, only argon and oxygen are supplied, without the raw material gases, and so the rod may return quickly to a reference position. The same effect can be achieved by using a gas containing fluorine other than the silicon tetrafluoride as the dopant, such as ethane hexafluoride, sulfur hexafluoride, or the like. Hereinafter, some embodiments and a comparative example of the present invention will be described, but the invention is not limited to these embodiments.

First Embodiment

A fluorine-doped quartz glass layer was formed by using a high frequency induction thermal plasma torch to deposit glass particles on a quartz glass rod that has an outer diameter of 50 mm and a length of 1,100 mm and that moves up and down vertically while rotating.

The velocity of the glass rod relative to the plasma torch during forward movement was set to 75 mm/min, and the plasma torch was supplied with argon, oxygen, silicon tetrachloride, and silicon tetrafluoride. The direction of the forward movement was set to be downward. Forced cooling nozzles were provided above and below the plasma torch, and each forced cooling nozzle blows room-temperature air at a rate of 30 L/min to cool the upper and lower edges of the portion undergoing deposition. Cool air induction openings were formed above and below the reaction chamber, and each cool air induction aperture supplies air cooled to 10 decrees Celsius at a rate of 200 L/min. As shown in Fig. 5, the deposition obstructing gas nozzle was positioned to form a 90-degree angle with the plasma torch 1 and was positioned upstream relative to the rotational direction of the rod. The deposition obstructing gas nozzle 10 is directed toward a position 35 mm below the central peak of the plasma torch 1, and blows room temperature air at a rate of 50 L/min. The power supplied to the plasma torch 1 was set to 61 kW, which is the minimum power needed to convert the glass raw material into glass.

The velocity of the glass rod relative to the plasma torch during backward movement was set to 500 mm/min, and the plasma torch was supplied with argon and oxygen. The power supplied to the plasma torch 1 during the backward movement was set to 8 kW, which is the minimum power needed to safely maintain the plasma.

Under these conditions, a fluorine-doped glass layer was formed by repeated deposition over the course of 60 full trips of the glass rod backward and forward over the plasma torch. Upon analyzing the refractive index distribution of the resulting preform, the relative refractive index difference was found to be 1.73%.

Second Embodiment

The forced cooling nozzle 8 was provided only above the plasma torch, as shown in Fig. 4, and blew room-temperature air onto the glass rod 6 at a rate of 30 L/min to cool the upper edge of the region undergoing deposition. The gas guide tube 11 was provided immediately below the plasma torch 1. A fluorine-doped glass layer was formed on the glass rod by repeated deposition over the course of 60 full trips of the glass rod backward and forward over the plasma torch, in the same manner as in the First Embodiment, aside from the obstruction of the glass particle flow below the plasma flame. Upon analyzing the refractive index distribution of the resulting preform, the relative refractive index difference was found to be 1.85%.

Third Embodiment

A fluorine-doped glass layer was formed on the glass rod by repeated deposition over the course of 60 full trips of the glass rod backward and forward over the plasma torch, in the same manner as in the First Embodiment, except that the deposition obstructing gas nozzle 10 was positioned to form a 90-degree angle with the plasma torch 1 and was positioned downstream relative to the rotational direction of the rod, as shown in Fig. 6. Upon analyzing the refractive index distribution of the resulting preform, the relative refractive index difference was found to be 1.83%.

First Comparative Example

A fluorine-doped quartz glass layer was formed by using a high frequency induction thermal plasma torch to deposit glass particles on a quartz glass rod that has an outer diameter of 50 mm and a length of 1,100 mm and that moves up and down vertically while rotating.

The velocity of the glass rod relative to the plasma torch during forward movement was set to 75 mm/min, and the plasma torch was supplied with argon, oxygen, silicon tetrachloride, and silicon tetrafluoride. The direction of the forward movement was set to be downward. Forced cooling nozzles were provided above and below the plasma torch, and each forced cooling nozzle blows room-temperature air at a rate of 30 L/min. Air cooled to 10 decrees Celsius was supplied from top and bottom portions of the reaction chamber at a rate of 200 L/min. The power supplied to the plasma torch was set to 61 kW, which is the minimum power needed to convert the glass raw material into glass.

The velocity of the glass rod relative to the plasma torch during backward movement was set to 500 mm/min, and the plasma torch was supplied with argon and oxygen, but the silicon tetrachloride and the silicon tetrafluoride, which are the glass raw material and the fluorine source, were not supplied. The power supplied to the plasma torch 1 during the backward movement was set to 8 kW, which is the minimum power needed to safely maintain the plasma.

Under these conditions, a fluorine-doped glass layer was formed by repeated deposition over the course of 60 full trips of the glass rod backward and forward over the plasma torch. Upon analyzing the refractive index distribution of the resulting preform, the relative refractive index difference was found to be 1.62%, which is lower than that of the First Embodiment and the Second Embodiment.

As made clear form the above, the present invention can be used to obtain an optical fiber with a large relative refractive index difference Δ.

**Claims**

1. A method for manufacturing an optical fiber preform, comprising:

synthesizing glass particles using a plasma flame (4) generated by a plasma torch (1);
depositing the glass particles containing fluorine as a dopant on a glass rod (6) by blowing the glass rod with the plasma flame (4) with the glass particles containing fluorine while the glass rod moves relative to the plasma torch (1) in a forward direction;
narrowing, in a direction of the relative movement, a region in which the glass particles in the plasma flame are affixed to the glass rod (6) by narrowing the flame flow of the plasma flame (4) to retract an edge of the flame in the forward direction of the glass rod (6), and
moving the glass rod (6) relative to the plasma torch (1) in a backward direction while blowing the glass rod (6) with the plasma flame (4) without the glass particles containing fluorine,
wherein the narrowing comprises providing a room temperature air or cool air supplying section (10,11) for obstructing affixation of the glass particles on the glass rod (6) only in a front portion of the region, where the front portion is blown by the plasma flame (4) before a rear portion of the region.

2. The method according to Claim 1, wherein the depositing includes causing the glass rod (6) to move in a direction parallel to a length of the glass rod (6) and/or includes causing the glass rod to rotate on an axis that is parallel to a length of the glass rod.

3. The method according to claim 1 or 2, wherein the obstructing includes blowing gas onto the plasma flame (4) in a direction that intersects with a direction in which the plasma flame is blown to the glass rod.

4. The method according to Claims 1 to 3, wherein the obstructing includes blowing the gas along a surface of the glass rod (6).

5. The method of any preceding claim wherein the room temperature air or cool air supplying section (10) is configured to supply air to the forward side of the glass rod (6) relative to the position of the plasma torch (1).

6. An apparatus for manufacturing an optical fiber preform comprising:

a plasma torch (1) for synthesizing glass particles in a plasma flame (4);
a depositing section for depositing the glass particles containing fluorine as a dopant on the glass rod by blowing the glass rod with the plasma flame with the glass particles containing fluorine while the glass rod moves relative to the plasma torch in a forward direction;
a limiting section for narrowing, in a direction of the relative movement, a region in which the glass particles in the plasma flame are affixed to the glass rod by narrowing the flame flow of the plasma flame to retract an edge of the flame in the forward direction of the glass rod, wherein the glass rod is moveable relative to the plasma torch (1) in a backward direction while blowing the glass rod (6) with the plasma flame (4) without the glass particles containing fluorine,
wherein the limiting section comprises a room temperature air or cool air supplying section (10,11) that obstructs affixation of the glass particles on the glass rod and is provided only in a front portion of the region, where the front portion is blown by the plasma flame before a rear portion of the region.

7. The apparatus according to Claim 6, wherein

the depositing section moves the glass rod (6) in a direction parallel to a length of the glass rod, and/or the depositing section rotates the glass rod (6) on an axis that is parallel to a length of the glass rod.

8. The apparatus according to claim 6 or 7 wherein the limiting section includes a nozzle that blows gas onto the plasma flame in a direction that intersects with a direction in which the plasma flame is blown to the glass rod.

9. The apparatus according to Claims 6 to 7, wherein the limiting section includes a guiding section that blows the gas along a surface of the glass rod.

10. The apparatus of any of claims 6 to 9 wherein the room temperature air or cool air supplying section is configured to supply air to the forward side of the glass rod (6) relative to the position of the plasma torch (1).

**Patentansprüche**

1. Verfahren zum Herstellen einer Vorform einer optischen Faser, mit den Schritten:

Synthetisieren von Glaspartikeln unter Verwendung einer durch einen Plasmabrenner (1) erzeugten Plasmaflamme (4);
Abscheiden der Glaspartikel, die Fluor als einen Dotierstoff enthalten, auf einen Glasstab (6) durch Beströmen des Glasstabs mit der Plasmaflamme (4) enthaltend die Glaspartikel, die Fluor als einen Dotierstoff enthalten, während der Glasstab sich relativ zu dem Plasmabrenner (1) in einer Vorwärtsrichtung bewegt; und
Verengen eines Bereichs, in dem die Glaspartikel in der Plasmaflamme an den Glasstab (6) angeheftet werden, in Richtung der Relativbewegung durch Verengen des Flammenstroms der Plasmaflamme (4), um einen Rand der Flamme in der Vorwärtsrichtung des Glasstabs (6) zu zurückzuziehen; und
Bewegen des Glasstabs (6) relativ zum Plasmabrenner (1) in einer Rückwärtsrichtung, während der Glasstab (6) mit der Plasmaflamme (4) ohne die fluorhaltigen Glaspartikel beströmt wird,
wobei das Verengen das Bereitstellen eines Raumtemperaturluft- oder eines Kühlluftzufuhrabschnitts (10, 11) aufweist zum Unterdrücken des Anhaftens der Glaspartikel auf dem Glasstab (6) nur in einem vorderen Abschnitt des Bereichs, wo der vordere Abschnitt vor einem hinteren Abschnitt des Bereichs mit der Plasmaflamme (4) beströmt wird.

2. Verfahren nach Anspruch 1, wobei das Abscheiden aufweist das Veranlassen, dass der Glasstab (6) sich in einer Richtung parallel zu einer Länge des Glasstabs (6) bewegt, und/oder das Veranlassen, dass der Glasstab sich auf einer sich parallel zu einer Länge des Glasstabs erstreckenden Achse dreht.

3. Verfahren nach Anspruch 1 oder 2, wobei das Unterdrücken des Anhaftens der Glaspartikel das Aufblasen von Gas auf die Plasmaflamme (4) in einer Richtung aufweist, die eine Richtung schneidet, in der der Glasstab mit der Plasmaflamme beströmt wird.

4. Verfahren nach einem der Ansprüche 1 bis 3, wobei das Unterdrücken das Blasen des Gases entlang einer Oberfläche des Glasstabs (6) aufweist.

5. Verfahren nach einem der vorangehenden Ansprüche, wobei der Raumtemperaturluft- oder Kühlluftzufuhrabschnitt (10) konfiguriert ist, um der Vorderseite des Glasstabs (6) relativ zur Position des Plasmabrenners (1) Luft zuzuführen.

6. Eine Vorrichtung zum Herstellen einer Vorform einer optischen Faser, mit:

einem Plasmabrenner (1) zum Synthetisieren von Glaspartikeln in einer Plasmaflamme (4);
einem Abscheidungsabschnitt zum Abscheiden der Glaspartikel, die Fluor als einen Dotierstoff enthalten, auf den Glasstab durch Beströmen des Glasstabs mit der Plasmaflamme enthaltend die Glaspartikel, die Fluor als einen Dotierstoff enthalten, während der Glasstab sich relativ zum Plasmabrenner in einer Vorwärtsrichtung bewegt;
einem Begrenzungsabschnitt zum Verengen eines Bereichs, in dem die Glaspartikel in der Plasmaflamme an den Glasstab angeheftet werden, in Richtung der Relativbewegung, durch Verengen des Flammenstroms der Plasmaflamme, um einen Rand der Flamme in der Vorwärtsrichtung des Glasstabs zurückzuziehen, wobei
der Glasstab relativ zum Plasmabrenner (1) in einer Rückwärtsrichtung bewegbar ist, während der Glasstab (6) mit der Plasmaflamme (4) ohne die fluorhaltigen Glaspartikel beströmt wird, und
wobei der Begrenzungsabschnitt einen Raumtemperaturluft- oder Kühlluftzufuhrabschnitt (10, 11) aufweist, der das Anhaften der Glaspartikel auf dem Glasstab unterdrückt, und der nur in einem vorderen Abschnitt des Bereichs angeordnet ist, wo der vordere Abschnitt vor einem hinteren Abschnitt des Bereichs mit der Plasmaflamme beströmt wird.

7. Die Vorrichtung nach Anspruch 6, wobei der Abscheidungsabschnitt den Glasstab (6) in einer Richtung parallel zu einer Länge des Glasstabs bewegt, und/oder wobei der Abscheidungsabschnitt den Glasstab (6) auf einer sich parallel zu einer Länge des Glasstabs erstreckenden Achse dreht.

8. Die Vorrichtung nach Anspruch 6 oder 7, wobei der Begrenzungsabschnitt eine Düse aufweist, die Gas auf die Plasmaflamme in einer Richtung bläst, die eine Richtung schneidet, in der die Plasmaflamme auf den Glasstab geblasen wird.

9. Die Vorrichtung nach Anspruch 6 oder 7, wobei der Begrenzungsabschnitt einen Führungsabschnitt aufweist, der das Gas entlang einer Oberfläche des Glasstabs bläst.

10. Die Vorrichtung nach einem der Ansprüche 6 bis 9, wobei der Raumtemperaturluft- oder Kühlluftzufuhrabschnitt konfiguriert ist, um der Vorderseite des Glasstabs (6) relativ zur Position des Plasmabrenners (1) Luft zuzuführen.

**Revendications**

1. Procédé de fabrication d'une préforme de fibre optique, comprenant :

   la synthèse de particules de verre en utilisant une flamme de plasma (4) générée par une torche à plasma (1) ;
   le dépôt des particules de verre contenant du fluor en tant que dopant sur une baguette de verre (6) par un soufflage de la baguette de verre à la flamme du plasma (4) avec les particules de verre contenant du fluor tandis que la baguette de verre se déplace par rapport à la torche à plasma (1) dans le sens avant ;
   le rétrécissement, dans la direction du mouvement relatif, d'une zone dans laquelle les particules de verre dans la flamme du plasma sont fixées à la baguette de verre (6) en réduisant le flux de la flamme du plasma (4) pour reculer le bord de la flamme dans le sens avant de la baguette de verre (6), et
   le déplacement de la baguette de verre (6) par rapport à la torche à plasma (1) dans le sens arrière tout en soufflant la baguette de verre (6) à la flamme du plasma (4) sans les particules de verre contenant le fluor,
   où le rétrécissement comprend la délivrance d'un air à la température ambiante ou une section de fourniture d'air frais (10, 11) pour bloquer la fixation des particules de verre sur la baguette de verre (6) uniquement dans la partie avant de la zone, où la partie avant est soufflée par la flamme du plasma (4) antérieurement à la partie arrière de la zone.

2. Procédé selon la revendication 1, dans lequel le dépôt comprend la mise en mouvement de la baguette de verre (6) dans une direction parallèle à la longueur de la baguette de verre (6) et/ou comprend la mise en rotation de la baguette de verre sur un axe qui est parallèle à la longueur de la baguette de verre.

3. Procédé selon la revendication 1 ou 2, dans lequel le blocage comprend le soufflage d'un gaz sur la flamme du plasma (4) dans une direction qui coupe la direction dans laquelle la flamme du plasma est soufflée vers la baguette de verre.

4. Procédé selon les revendications 1 à 3, dans lequel le blocage comprend le soufflage du gaz le long d'une surface de la baguette de verre (6).

5. Procédé selon une quelconque revendication précédente, dans lequel la section pour la délivrance de l'air frais ou de l'air à la température ambiante (10) est configurée pour délivrer de l'air vers le côté avant de la baguette de verre (6) par rapport à la position de la torche à plasma (1).

6. Appareil destiné à fabriquer une préforme de fibre optique comprenant :

   une torche à plasma (1) pour synthétiser des particules de verre dans une flamme de plasma (4) ;
   une section de dépôt pour déposer les particules de verre contenant du fluor en tant que dopant sur la baguette de verre en soufflant la baguette de verre à la flamme du plasma avec les particules de verre contenant du fluor tandis que la baguette de verre se déplace par rapport à la torche à plasma dans le sens avant ;
   une section de limitation pour le rétrécissement, dans la direction du déplacement relatif, d'une zone dans laquelle les particules de verre dans la flamme du plasma sont fixées à la baguette de verre en réduisant le flux de la flamme du plasma (4) pour reculer le bord de la flamme dans le sens avant de la baguette de verre (6), où
   la baguette de verre peut être déplacée par rapport à la torche à plasma (1) en sens arrière tout en soufflant la baguette de verre (6) à la flamme du plasma (4) sans les particules de verre contenant du fluor,
   où la section de limitation comprend une section de délivrance d'air frais ou d'air à la température ambiante (10, 11)
   qui bloque la fixation des particules de verre sur la baguette de verre et est mise à disposition uniquement dans la partie avant de la zone, où la partie avant est soufflée par la flamme du plasma antérieurement à la partie arrière de la zone.

7. Appareil selon la revendication 6, dans lequel la section de dépôt se déplace sur la baguette de verre (6) dans une direction parallèle à la longueur de la baguette de verre, et/ou la section de dépôt met la baguette de verre (6) en rotation sur un axe qui est parallèle à la longueur de la baguette de verre.

8. Appareil selon la revendication 6 ou 7, dans lequel la section de limitation comprend une buse qui souffle du gaz sur la flamme du plasma dans une direction qui coupe la direction dans laquelle la flamme du plasma est soufflée vers la baguette de verre.

9. Appareil selon les revendications 6 à 7, dans lequel la section de limitation comprend une section de guidage qui souffle le gaz le long de la surface de la baguette de verre.

10. Appareil selon l'une quelconque des revendications 6 à 9, dans lequel la section pour la délivrance de l'air frais ou de l'air à la température ambiante est configurée pour délivrer de l'air vers le côté avant de la baguette de verre (6) par rapport à la position de la torche à plasma (1).

FORWARD
(DEPOSITION)

BACKWARD
(NO DEPOSITION)

*FIG.1*

FIG.2

FORWARD
(DEPOSITION)

BACKWARD
(NO DEPOSITION)

*FIG.3*

FORWARD
(DEPOSITION)

BACKWARD
(NO DEPOSITION)

9

5

8

4

2

1

7

11

6

3

*FIG.4*

*FIG.5*

*FIG.6*

ROD ROTATION

FLAME CENTER

HOTTEST REGION

ROD MOVEMENT

| ROD BACK SURFACE | ROD LEFT SURFACE | ROD RIGHT SURFACE | ROD RIGHT SURFACE | ROD BACK SURFACE |

*FIG.7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4079981 A
- JP 2047414 A
- JP 2007142423 A
- EP 1997783 A2
- US 5194714 A
- DE 10043031 A1